Europäisches Patentamt

European Patent Office

Office européen des brevets

(19)

(11) Veröffentlichungsnummer: **0 332 058**

**A1**

(12) **EUROPÄISCHE PATENTANMELDUNG**

(21) Anmeldenummer: 89103693.1

(22) Anmeldetag: 02.03.89

(51) Int. Cl.⁴: **G11B 21/12 , G11B 19/20**

(30) Priorität: 07.03.88 DE 3807423

(43) Veröffentlichungstag der Anmeldung:
13.09.89 Patentblatt 89/37

(84) Benannte Vertragsstaaten:
AT CH DE FR GB IT LI NL

(71) Anmelder: **Siemens Aktiengesellschaft**
**Wittelsbacherplatz 2**
**D-8000 München 2(DE)**

(72) Erfinder: **Immler, Josef, Dipl.-Ing. (FH)**
**Schwarzäckerstrasse 72**
**D-8031 Puchheim(DE)**
Erfinder: **Roemer, Hermann, Dr. rer. nat.**
**Arastrasse 34**
**D-8014 Neubiberg(DE)**

(54) **Schaltungsanordnung zum automatischen Rückführen einer Positioniereinrichtung eines Datenspeichers in eine Ruhestellung.**

(57) Bei rotatorisch bewegten Datenspeichern wird die Positioniereinrichtung bei Außerbetriebnahme, insbesondere auch im Störungsfall unter Verwendung der im Speicherplattenmodul gespeicherten kinetischen Energie in eine vorgegebene Ruhestellung zurückgeführt. Dies soll störungsfrei und möglichst betriebssicher erfolgen, um Datenverluste und Beschädigungen an Datenplatten bzw. Abtasteinrichtungen zu vermeiden.

Zwischen Speicherplattenantrieb (M) und Positionierantrieb (P) ist ein Schaltnetzwerk (3) angeordnet, das im Leitungszweig zwischen dem Speicherplattenantrieb und dem Positionierantrieb (P) einen durch ein Zustandssignal (RET-P) zu sperrenden bzw. in die Sättigung zu steuernden Schalttransistor (T1) aufweist. In der Rückleitung zwischen dem Positionierantrieb und dem Plattenspeicherantrieb ist eine Diode angeordnet, die im normalen Betriebszustand des Datenspeichers in Sperrichtung vorgespannt ist.

Datenspeicher mit Relativbewegung, insbesondere Magnetplattenspeicher.

EP 0 332 058 A1

## Schaltungsanordnung zum automatischen Rückführen einer Positioniereinrichtung eines Datenspeichers in eine Ruhestellung

Die Erfindung bezieht sich auf eine Schaltungsanordnung zum automatischen Rückführen einer Positioniereinrichtung eines Datenspeichers in eine Ruhestellung gemäß dem Oberbegriff des Hauptanspruches.

Bei Datenspeichern mit einem plattenförmig ausgebildeten Aufzeichnungsmedium wird zum Lesen, aber auch zum Einschreiben von Information eine Abtasteinheit relativ zum Aufzeichnungsmedium bewegt. Dabei besteht das Problem, diese Abtasteinheit bei einer Außerbetriebnahme des Datenspeichers in eine vorgegebene Ruhestellung zurückzuführen. Insbesondere bei Magnetplattenspeichern ist es notwendig, den während des normalen Betriebes in geringem Abstand über der Speicherplatte schwebenden Magnetkopf, der hier die Abtasteinheit bildet, in eine Landezone zurückzuziehen, solange die Speicherplatte noch mit ausreichender Geschwindigkeit umläuft. Bei zu kleiner Relativgeschwindigkeit zwischen Speicherplatte und Magnetkopf reichen die Auftriebskräfte für den Magnetkopf nicht mehr aus und er landet auf der empfindlichen Oberfläche der Speicherplatte. Bei einer unkontrollierten Landung können die Speicherplatte im Datenbereich und sogar der Magnetkopf beschädigt werden.

Üblicherweise wird die Abtasteinheit mit Hilfe einer elektrodynamisch angetriebenen Positioniereinrichtung radial in bezug auf die zugeordnete Speicherplatte bewegt. Für diese geregelte Positionierbewegung ist daher elektrische Energie erforderlich. Deshalb ist insbesondere der Ausfall von Betriebsspannungsquellen im Fehlerfall kritisch. Auch in diesem Fall muß eine sichere automatische Rückführung der Positioniereinrichtung in eine vorgegebene Ruhestellung gewährleistet sein, um damit die Abtasteinheit in eine Landezone über der Speicherplatte zu tragen.

Da insbesondere bei einer durch eine Störung bedingten Außerbetriebnahme des Datenspeichers auch mit dem Ausfall der Betriebsspannungen gerechnet werden muß, ist es zum automatischen Zurückführen der Positioniereinrichtung des Datenspeichers üblich, während des normalen Betriebszustandes Energie so zu speichern, daß sie bei Außerbetriebnahme noch zur Verfügung steht, um die Positioniereinrichtung in die vorgesehene Ruhestellung zurückzuführen. Dafür kann, wie aus US-A-4,237,501 bekannt, speziell ein entsprechend dimensionierter Kondensator vorgesehen sein, der im normalen Betriebszustand aufgeladen wird. Die zum automatischen Zurückführen der Positioniereinrichtung notwendige Energie kann aber auch, wie aus US-A-3,629,679 bekannt, in Schaltungsteilen gespeichert sein, die an sich für die normale Funktion des Datenspeichers notwendig sind. Bei der aus dem zitierten Dokument bekannten Einrichtung handelt es sich dabei um Stromversorgungseinrichtungen für die Positioniereinrichtung, die aus einer Wechselspannungsquelle gespeist werden und an den Antrieb der Positioniereinrichtung eine geregelte Gleichspannung abgeben. Nachteilig an diesen bekannten Möglichkeiten zum Speichern von Energie für das automatische Rückführen der Positioniereinrichtung in eine vorgegebene Ruhestellung ist, daß dafür Kondensatoren verhältnismäßig hoher Kapazität notwendig sind. Im normalen Betriebszustand muß, dadurch bedingt, eine höhere Verlustleistung oder, anders ausgedrückt, die Erniedrigung der Versorgungsspannungen für den Antrieb des Datenplattenstapels bzw. der Positioniereinrichtung in Kauf genommen werden.

Eine weitere Möglichkeit, während des normalen Betriebes gespeicherte Energie zum Rückführen der Positioniereinrichtung in die Ruhestellung bei einer Außerbetriebnahme nutz bar zu machen, ist aus US-A-4,371,903 bekannt. Bei dieser bekannten Lösung ist der Antriebsmotor für die Datenspeicherplatten als kommutatorloser Gleichstrommotor ausgebildet. Dies erlaubt es, die in dem Plattenstapel und dem angekoppelten Antriebsmotor gespeicherte kinetische Energie zum Zurückführen der Positioniereinrichtung in die Ruhestellung zu verwenden. Es ist ein Schaltnetzwerk vorgesehen, das ein Relais aufweist. Im Störungsfall wird das Relais erregt, das durch ein Zustandssteuersignal geschaltet wird. So wird über das Schaltnetzwerk ein Stromkreis geschlossen, der die im Stern geschalteten Windungen des Antriebsmotors über Gleichrichterdioden unmittelbar mit dem Antrieb der Positioniereinrichtung verbindet. In diesem Zustand arbeitet der Antriebsmotor für die Datenspeicherplatten im Generatorbetrieb und liefert den notwendigen Strom, um die Positioniereinrichtung in die Ruhestellung zurückzuführen. Nachteilig bei dieser bekannten Lösung sind durch die Schaltvorgänge am Relais hervorgerufenen Störimpulse, die für ein betriebssicheres Zurückführen der Positioniereinrichtung in die vorgegebene Ruhestellung unerwünscht sind.

Der vorliegenden Erfindung liegt daher die Aufgabe zugrunde, eine Schaltungsanordnung gemäß dem Oberbegriff des Hauptanspruches derart auszubilden, daß unter Ausnutzung der im rotierenden Plattenstapel gespeicherten kinetischen Energie auf einfache Weise ein betriebssicheres, d. h. störungsfreies und trotzdem unverzögertes Rückführen der Positioniereinrichtung in eine vorgegebene Ruhestellung sichergestellt wird.

Diese Aufgabe wird erfindungsgemäß bei einer Schaltungsanordnung zum automatischen Rückführen einer Positioniereinrichtung eines Datenspeichers gemäß dem Oberbegriff des Hauptanspruches durch die im Kennzeichen des Hauptanspruches beschriebenen Merkmale gelöst.

Die erfindungsgemäße Lösung kommt ohne elektromechanische Schaltelemente aus, eliminiert also damit die Ursache für unerwünschte Störimpulse, die den Rückholvorgang der Positioniereinrichtung in die vorgegebene Ruhestellung beeinträchtigen könnten. Der prinzipielle Aufbau ist außerordentlich einfach und erlaubt trotzdem ein einwandfreies Schaltverhalten ohne Rückwirkungen auf die normalen Versorgungsspannungen des Antriebsmotors für die Datenspeicherplatten bzw. des Antriebssystemes der Positioniereinrichtung.

Die erfindungsgemäße Schaltungsanordnung arbeitet während des Hochlaufens des Antriebsmotors als Spannungsbegrenzung für die Leistungstransistoren des Spindelantriebes. Sie ist so ausgelegt, daß in der Zuleitung der Betriebsspannung keine Entkopplungsdiode benötigt wird, damit ist im Gerät eine höhere Spannung verfügbar, die eine höhere Positioniergeschwindigkeit zuläßt. Schließlich ist sie auch bei unipolarer Ansteuerung des Antriebsmotors einsetzbar.

Wie in Unteransprüchen beschriebene Weiterbildungen der Erfindung zeigen, läßt sich das Schaltnetzwerk mit geringem Schaltungsaufwand derart weiterbilden, daß es den vom im Generatorbetrieb arbeitenden Antriebsmotor gelieferten Motorstrom nicht begrenzt und möglichst trägheitslos an das Antriebssystem der Positioniereinrichtung liefert. Weiterhin kann das Schaltnetzwerk in Verbindung mit einer Positionierregelschaltung, die über je einen Positionierverstärker mit seriell angeschalteten Meßwiderstand an die Anschlüsse des Antriebssystems für die Positioniereinrichtung angeschlossen ist, derart ausgebildet sein, daß es, abhängig vom jeweiligen Betriebszustand, diese Positionierverstärker freischaltet bzw. deren Ausgänge so hochohmig legt, daß die Positionierregelschaltung keine Rückwirkungen auf den Antrieb der Positioniereinrichtung beim Zurückholen in die Ruhestellung ausübt. Weitere Weiterbildungen der Erfindung sind in übrigen Unteransprüchen gekennzeichnet, sie werden ebenso wie weitere Vorteile der erfindungsgemäßen Lösung in der nachfolgenden Beschreibung eines Ausführungsbeispieles ausführlich erläutert.

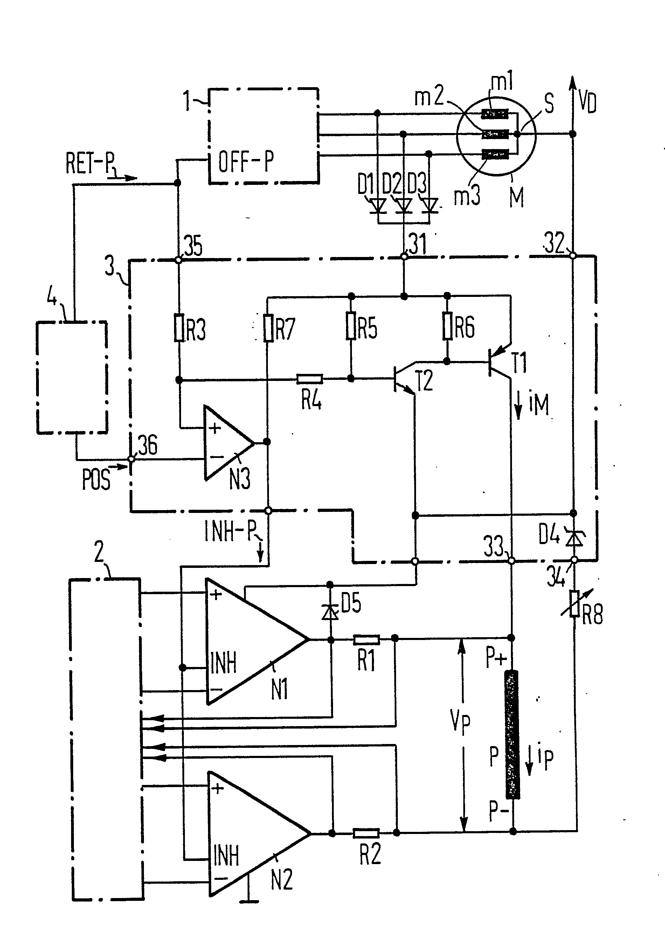

Die einzige FIG zeigt zunächst schematisch einen Antriebsmotor M für den Plattenstapel eines Datenspeichers mit drei Motorwicklungen m1, m2 bzw. m3 in Sternschaltung, deren gemeinsamer Sternpunkt S an positiver Betriebsspannung $V_D$ liegt. Der Antriebsmotor M ist als elektronisch kommutierter Gleichstrommotor ausgeführt, deshalb sind die dem Sternpunkt S gegenüberliegenden Anschlüsse der Motorwicklungen m1 bis m3 jeweils an eine Motorregelschaltung 1 angeschlossen, die in bekannter Weise in zyklischer Vertauschung die Motorwicklungen m1 bis m3 freischaltet. Diese Motorregelschaltung ist derart ausgelegt, daß sie den Antriebsmotor M bei Inbetriebnahme des Datenspeichers schnell auf seine vorgegebene Nenndrehzahl hochfährt und ihn dann eng toleriert auf dieser Drehzahl hält.

Im unteren Teil der Schaltungsanordnung ist schematisch eine Positionierspule P gezeigt, die das Antriebssystem einer Positioniereinrichtung des Datenspeichers bildet, mit der nicht dargestellte Abtasteinrichtungen des Datenspeichers radial zu den ebenso nicht dargestellten Datenplatten positionierbar sind. Ist der Datenspeicher als Magnetplattenspeicher ausgebildet, so handelt es sich bei diesen Positioniereinrichtungen um Magnetköpfe zum Aufzeichnen bzw. Lesen von Informationen, im Falle eines optischen Datenspeichers stellen diese Abtasteinrichtungen optische Abtastköpfe dar, die auf die Datenspuren der optischen Datenplatten einstellbar sind. Die Spureinstellung und Spurhaltung von Datenspeichern erfordert bekanntlich ein komplexes Regelsystem, das allerdings hier im Rahmen der vorliegenden Erfindung nicht von Bedeutung ist. Dieses Regelsystem ist daher hier lediglich schematisch als eine Positionierregelschaltung 2 angedeutet. Die Positionierregelschaltung 2 steuert selektiv zwei als Differenzspannungsverstärker aus gebildete Positionierverstärker N1 bzw. N2 an, deren Ausgänge über Meßwiderstände R1 bzw. R2 jeweils an einen der beiden Anschlüsse P + bzw. P-der Positionierspule angeschlossen sind.

Beide Regelschaltungen zum Antrieb des Antriebsmotors M bzw. der Positionierspule P arbeiten im normalen Betrieb völlig unabhängig voneinander. Bei Außerbetriebnahme, aber auch in einem Störungsfall jedoch, beispielsweise bei Ausfall der Betriebsspannung $V_D$, soll die im Plattenstapel und dem angeschlossenen Antriebsmotor M gespeicherte kinetische Energie dazu dienen, die Positioniereinrichtung in eine vorgegebene Ruhestellung zurückzuführen. Um dies zu erreichen, ist ein Schaltnetzwerk 3 vorgesehen, das den dann im Generatorbetrieb arbeitenden Antriebsmotor M in einer Weise an die Positionierspule P anschaltet, daß die über die EMK des Antriebsmotors M erzeugte Spannung in der Positionierspule P einen Spulenstrom $i_P$ bewirkt, der die Positioniereinrichtung in die vorgegebene Ruhestellung zurückholt.

Dazu ist das Schaltnetzwerk 3 mit einem motorseitigen Eingang 31 über drei parallel geschaltete Gleichrichterdioden D1, D2, D3 jeweils mit dem vom Sternpunkt S abgewandten Anschluß einer der Motorwicklungen m1, m2 bzw. m3 verbunden. Ein motorseitiger Schaltungsausgang 32 des Schaltnetzwerkes ist mit dem Sternpunkt S des Antriebsmotors M verbunden. Andererseits ist die Positionierspule P mit ihren Anschlüssen P+ und P- an einen spulenseitigen Ausgang 33 bzw. an einen spulenseitigen Eingang 34 des Schaltnetzwerkes angeschlossen. Im Schaltnetzwerk 3 selbst ist zwischen dem motorseitigen Eingang 31 und dem spulenseitigen Ausgang 33 ein Schalttransistor T1 bzw. zwischen dem spulenseitigen Eingang 34 und dem motorseitigen Ausgang 32 eine Schottkydiode D4 vorgesehen. Beide Schaltelemente sind nur beim Hochlaufen des Motors M oder im Störungsfall aktiviert und schließen so den Stromkreis zwischen den Wicklungen m1, m2 bzw. m3 des Antriebsmotors M und der Positionierspule P.

Das Schaltnetzwerk 3 weist zum Einstellen der beiden Schaltungszustände einen ersten und einen zweiten Steuereingang 35 bzw. 36 auf. Eine schematisch angedeutete Steuerelektronik 4 liefert in bekannter Weise ein erstes Zustandssignal RET-P. Dessen einer Signalzustand "O" definiert den normalen Betriebszustand, bei dem die Motorregelung und die Positionierregelung unabhängig voneinander arbeiten. Der andere Betriebszustand dieses ersten Zustandssignales ist dem Störungsfall zugeordnet, in dem das Schaltnetzwerk 3 aktiviert ist. Die Steuerelektronik 4 gibt an den zweiten Steuereingang 36 des Schaltnetzwerkes 3 ein zweites Zustandssignal POS ab, das im Sifnalzustand "H" die Stromregelung oder Positionierspule P über die Positionierverstärker N1 bzw. N2 freigibt.

Um diese Schaltfunktionen des Schaltnetzwerkes 3 zu ermöglichen, ist zwischen seinem ersten Steuereingang 35 und seinem motorseitigen Eingang 31 ein Spannungsteiler bestehend aus den Widerständen R3, R4 und R5 angeordnet. Der Verbindungspunkt der Widerstände R4 und R5 ist an die Basis eines weiteren Transistors T2 angeschlossen. Dessen Emitter-Kollektor-Strecke liegt in Serie mit einem weiteren, an den motorseitigen Eingang 31 angeschlossenen Widerstand R6, der zugleich den Emitter-Basis-Widerstand des Schalttransistors T1 bildet. Andererseits ist der Emitter des weiteren Transistors T2 mit dem motorseitigen Ausgang 32 des Schaltnetzwerkes verbunden.

Außerdem ist im Schaltnetzwerk 3 ein als Differenzspannungsverstärker ausgebildeter Komparator N3 vorgesehen, dessen nicht invertierender Eingang an den Verbindungspunkt der Widerstände R3 und R4 des Spannungsteilers angeschlossen ist und dessen invertierendem Eingang über den zweiten Steuereingang 36 das zweite Zustandssignal POS zugeführt ist. Der Ausgang dieses Komparators ist über einen Vorwiderstand R7 an den motorseitigen Eingang 31 des Schaltnetzwerkes angeschlossen und außerdem mit Inhibiteingängen INH der Positionierverstärker N1 und N2 verbunden.

Im normalen Betriebszustand weist das erste Zustandssignal RET-P definitionsgemäß den Signalzustand "O" auf. Damit ist der weitere Transistor T2 über den Spannungsteiler R3, R4, R5 gesperrt und also auch der Schalttransistor T1 gesperrt. Durch diese Schaltungsmaßnahme werden zusätzlich beim Hochlaufen des Motors M auftretende Kommutierungsspitzen begrenzt. Außerdem ist der Komparator N3 aktiviert. Mit dem zweiten Zustandssignal POS im Signalzustand "H" wird über den Komparator N3 das Inhibitsignal INH-P für die beiden Positionierverstärker N1, N2 abgeschaltet. Damit ist die Stromregelung für die Positionierspule P über die beiden Positionierverstärker N1, N2 freigegeben.

Bei Außerbetriebnahme, aber auch in Störfall, z. B. bei Ausfall der Versorgungsspannungen, d. h. auch der Betriebsspannung $V_D$ wechselt das erste Zustandssignal RET-P den Signalzustand von "O" nach "H". Da dieses Zustandssignal auch der Motorregelschaltung 1 zugeführt wird, wird diese damit ausgeschaltet. Zugleich werden die Positionierverstärker N1, N2 über den Komparator N3 und den Vorwiderstand R7 gesperrt, d. h. ihre Ausgänge hochohmig geschaltet. Weiterhin bewirkt das erste Zustandssignal über den Spannungsteiler R3, R4, R5, daß der weitere Transistor T2 und damit auch der Schalttransistor T1 leitend geschaltet werden. Die Schaltung ist so dimensioniert, daß der Schalttransistor T1 in die Sättigung gesteuert wird. Dies schafft eine leitende Verbindung derart, daß Rückstellstrom $i_M$ von den Motorwicklungen m1, m2, m3 über die zugeordneten Gleichrichterdioden D1, D2 bzw. D3 zur Positionierspule P und von dort über die Schottkydiode D4 zurück zum Motor m fließen kann.

Eine Freilaufdiode D5, die durch das Inhibitsignal INH-P nicht abschaltbar ist, ist entweder als diskretes Bauelement am Ausgang des Positionierverstärkers N1 angeordnet oder in den Positionierverstärker N1 integriert. Diese Freilaufdiode wird zur Spannungsbegrenzung benutzt und ist zusammen mit dem Emitter des weiteren Transistors T2 an den motorseitigen Ausgang 32 des Schaltnetzwerkes 3 angeschlossen. Damit bilden der dem Positionierverstärker N1 zugeordnete Meßwiderstand R1 und die Freilaufdiode D5 einen zur Reihenschaltung von Positionierspule P und Schottkydiode D4 parallel liegenden Strompfad, über den die gewünschte an der Positionierspule P anliegende Spannung $V_P$ begrenzt ist. Zwischen dem Anschluß P- der Positionierspule P und der Schottkydiode D4 ist ein Abgleichwiderstand R8 angeordnet, über den die Spannung $V_P$ einstellbar ist.

Der über den Schalttransistor T1 fließende Motorstrom $i_M$ ist im wesentlichen durch die EMK und dem Innenwiderstand des Antriebsmotors M bestimmt, da der in die Sättigung gesteuerte Schalttransistor T1 nicht strombegrenzend wirkt.

Dieser Strom ist jedoch erheblich größer als der für die Rückführung der Positioniereinrichtung in die Ruhestellung notwendige Spulenstrom i_P. Dies ist im vorliegenden Fall besonders vorteilhaft, da dadurch am Antriebsmotor M ein zusätzlicher Bremseffekt auftritt. Der Spulenstrom i_P selbst ist maximal in Ruhestellung der Positionierspule P, er ist dabei durch den Innenwiderstand der Positionierspule P und durch die an ihren Anschlüssen P+, P- anstehende Spulenspannung V_P bestimmt. Er nimmt mit wachsender Auslenkung der Positionierspule ab. Die Strom/Geschwindigkeits-Charakteristik ist also im Hinblick auf den Rückholvorgang optimiert.

### Ansprüche

1. Schaltungsanordnung zum automatischen Rückführen einer Positioniereinrichtung (P) eines Datenspeichers mit durch einen Antriebsmotor (M) rotatorisch bewegten Speicherplatten in eine vorgegebene Ruhestellung unter Verwendung des bei Außerbetriebnahme im Generatorbetrieb arbeitenden Antriebsmotors als Stromquelle für ein Antriebssystem (P) der Positioniereinrichtung, die über Gleichrichterdioden (D1, D2, D3) und ein durch ein Zustandssignal (RET-P) gesteuertes Schaltnetzwerk an den Antriebsmotor anschaltbar ist, **dadurch gekennzeichnet**, daß das Schaltnetzwerk einen abhängig von den Signalzuständen des Zustandssignales gesperrten bzw. in die Sättigung gesteuerten Schalttransistor (T1) im Leitungszweig zwischen Antriebsmotor und einem Anschluß (P+) des Antriebssystems der Positioniereinrichtung sowie eine Diode (D4) im Leitungszweig zwischen dem anderen Anschluß (P-) der Positionierspule und dem Antriebsmotor aufweist, die im normalen Betriebszustand des Datenspeichers in Sperrichtung vorgespannt ist.

2. Schaltungsanordnung nach Anspruch 1, **dadurch gekennzeichnet**, daß die Diode (D4) als Schottkydiode ausgebildet ist.

3. Schaltungsanordnung nach Anspruch 1 oder 2, **dadurch gekennzeichnet**, daß das Schaltnetzwerk (3) als Ansteuerschaltung für den Schalttransistor (T1) einen weiteren Transistor (T2) in Emitterschaltung bezüglich des Antriebsmotors (M) aufweist, dessen Basis über einen Spannungsteiler (R3, R4, R5) das Zustandssignal (RET-P) derart zugeführt ist, daß der weitere Transistor und infolgedessen auch der Schalttransistor im inaktiven Zustand des Zustandssignales gesperrt gehalten werden.

4. Schaltungsanordnung nach einem der Ansprüche 1 bis 3 in Verbindung mit einer Positionierregelschaltung (2), die über je einen Positionierverstärker (N1 bzw. N2) mit seriell angeschalteten Meßwiderständen (R1 bzw. R2) an die beiden Anschlüsse (P+, P-) des Antriebssystems (P) der Positioniereinrichtung angeschlossen ist, **dadurch gekennzeichnet**, daß die Positionierverstärker Inhibiteingänge (INH) aufweisen, über die die Ausgänge der Positionierverstärker durch Anlegen eines Inhibitsignales (INH-P) hochohmig schaltbar sind und daß im Schaltnetzwerk (3) ein Komparator (N3) zum Erzeugen des Inhibitsignales durch Vergleiches des Zustandssignales (RET-P) mit einem weiteren Zustandssignal (POS) vorgesehen ist, das zum Freigeben der Stromregelung des Antriebssystems (P) der Positioniereinrichtung über die Positionierverstärker aktiviert ist.

5. Schaltungsanordnung nach Anspruch 4, **dadurch gekennzeichnet**, daß der Schalttransistor (T1) als p-n-p-Transistor und der weitere Transistor (T2) als n-p-n-Transistor ausgebildet sind und daß ein Arbeitswiderstand (R6) vorgesehen ist, der zugleich den Emitter-Basis-Widerstand für den Schalttransistor und den Kollektorwiderstand für den weiteren Transistor bildet und der an einen motorseitigen Signaleingang (31) des Schaltnetzwerkes (3) angeschlossen ist.

6. Schaltungsanordnung nach Anspruch 5, **dadurch gekennzeichnet**, daß der Spannungsteiler (R3, R4, R5) im Schaltnetzwerk (3) zwischen einem ersten Steuereingang (35) zum Zuführen des Zustandssignales (RET-P) und dem motorseitigen Signaleingang (31) angeordnet ist und daß der den Spannungsteilerabgriff bildende Verbindungspunkt im Spannungsteiler an die Basis der weiteren Transistors (T2) angeschlossen ist.

7. Schaltungsanordnung nach Anspruch 6, **dadurch gekennzeichnet**, daß der Spannungsteiler aus drei Widerständen (R3, R4, R5) aufgebaut ist und daß der Verbindungspunkt des an den Steuereingang (31) angeschlossenen Widerstandes (R3) und dem Mittenwiderstand (R4) an den einen dem Zustandssignal (RET-P) zugeordneten Eingang des Komparators (N3) angeschlossen ist und der Verbindungspunkt des Mittenwiderstandes (R4) mit dem an den motorseitigen Signaleingang (31) des Schaltnetzwerkes (3) angeschlossenen Widerstands (R5) mit der Basis des weiteren Transistors (T2) verbunden ist.

8. Schaltungsanordnung nach Anspruch 7, **gekennzeichnet durch** einen weiteren Widerstand (R7), der zwischen dem Ausgang des Komparators (N3) und dem motorseitigen Signaleingang (31) des Schaltnetzwerkes (3) angeordnet ist.

9. Schaltungsanordnung nach einem der Ansprüche 4 bis 8, **dadurch gekennzeichnet**, daß eine Freilaufdiode (D5) vorgesehen ist, die mit einem der Meßwiderstände (R1) in Serie geschaltet, parallel zu der Serienschaltung Antriebssysteme (P) der Positioniereinrichtung und Schottkydiode (D4) angeordnet ist.

10. Schaltungsanordnung nach Anspruch 9, **dadurch gekennzeichnet,** daß die Freilaufdiode (D5) in den Positionierverstärker (N1) integriert ist, an dessen Ausgang der mit der Freilaufdiode in Serie liegende Meßwiderstand (R1) angeordnet ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 528 213 (TANDON CORP.)<br>* Seite 3, Zeile 21 - Seite 8, Zeile 33; Figuren 1-3 *<br>--- | 1,3 | G 11 B 21/12<br>G 11 B 19/20 |
| A | US-A-4 658 308 (C.M. SANDER)<br>* Spalte 5, Zeile 28 - Spalte 11, Zeile 24; Figur 2 *<br>--- | 1,3 | |
| A | US-A-3 626 264 (M.O. HALFHILL et al.)<br>* Spalte 2, Zeile 42 - Spalte 3, Zeile 45; Figur 2 *<br>--- | 1,3 | |
| A | PATENT ABSTRACTS OF JAPAN, Band 7, Nr. 75 (P-187)[1220], 29. März 1983, Seite 159 P 187; & JP-A-58 6560 (FUJITSU K.K.) 14-01-1983<br>* Zusammenfassung *<br>----- | 1 | |

RECHERCHIERTE
SACHGEBIETE (Int. Cl.4)

G 11 B

Der vorliegende Recherchenbericht wurde für alle Patentansprüche erstellt

| Recherchenort | Abschlußdatum der Recherche | Prüfer |
|---|---|---|
| DEN HAAG | 16-06-1989 | FUX J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument

EPO FORM 1503 03.82 (P0403)